Europäisches Patentamt

European Patent Office

Office européen des brevets

(19)

(11) Veröffentlichungsnummer: **0 155 648**
**B1**

(12) **EUROPÄISCHE PATENTSCHRIFT**

(45) Veröffentlichungstag der Patentschrift:
**18.01.89**

(51) Int. Cl.⁴: **G 01 M 15/00**

(21) Anmeldenummer: **85102990.0**

(22) Anmeldetag: **15.03.85**

(54) **Leistungsprüfstand für Motoren, insbesondere Landmaschinenmotoren.**

(30) Priorität: **22.03.84 AT 981/84**

(43) Veröffentlichungstag der Anmeldung:
**25.09.85 Patentblatt 85/39**

(45) Bekanntmachung des Hinweises auf die Patenterteilung:
**18.01.89 Patentblatt 89/3**

(84) Benannte Vertragsstaaten:
**CH DE FR GB IT LI NL SE**

(56) Entgegenhaltungen:
**DE-A- 2 912 283**
**GB-A- 2 012 054**
**US-A- 3 942 375**
**US-A- 3 977 240**

(73) Patentinhaber: **Partel, Georg, Gardis 14, A-6833 Weiler (AT)**

(72) Erfinder: **Partel, Georg, Gardis 14, A-6833 Weiler (AT)**

(74) Vertreter: **Hefel, Herbert, Dipl.-Ing., Egelseestrasse 65a Postfach 61, A-6800 Feldkirch (AT)**

## Beschreibung

Die Erfindung bezieht sich auf einen Leistungsprüfstand für Motoren, insbesondere Landmaschinenmotoren, mit einem mit der Zapfwelle des zu prüfenden Motors verbindbaren Vorgelege und einer vom Vorgelege antreibbaren Ölpumpe, welche in einem in sich geschlossenen hydraulischen Kreis angeordnet ist, welcher ausserdem ein regelbares Drosselventil, ein Druckmessgerät, einen kühlbaren Ölbehälter sowie eine diese Baugruppe verbindende Leitung umfasst, wobei das Vorgelege ferner mit einem Drehzahlmesser verbunden ist.

Solche Leistungsprüfstände sind bekannt. Sie werden bei Landmaschinenhändlern und bei Landmaschinen-Reparaturwerkstätten verwendet und dienen zu Prüfung von Drehzahl, Drehmoment und Leistung von Motoren bei landwirtschaftlichen Maschinen. Die Motoren werden dabei unter Last geprüft. Andere Messungen, wie beispielsweise Kraftstoffverbrauch, sind ebenfalls möglich. Dies ist wichtig, wenn gebrauchte Maschinen von einem Händler als Anzahlung entgegengenommen werden, aber auch bei Motorreparaturen wird nach Abschluss der Überholungs- und Wartungsarbeiten der Motor mit Hilfe eines solchen Gerätes neu eingestellt. Auch bei der Übergabe einer fabriksneuen Maschine an einen Kunden können die wichtigen Motordaten vorgeführt werden, was sicherlich das Vertrauensverhältnis zwischen Kunden und Händler bzw. zwischen Kunden und Reparaturwerkstatt aufwertet und verbessert.

Bei den bekannten Einrichtungen muss für die erwähnte Messaufgabe die Ölpumpe mit einer vorgegebenen Drehzahl angetrieben werden, beispielsweise mit 535, 720 oder 1000 U/min. Das vorerst geöffnete Drosselventil wird langsam geschlossen und der zu prüfende Motor mit Gas beaufschlagt, so dass die erst angefahrene Drehzahl trotz Leistungsabgabe gehalten werden kann. Die damit verbundene Druckerhöhung in der Ölleitung wird durch das Druckmessgerät wahrgenommen, das mit entsprechend beschrifteten Skalen bestückt ist, so dass die angezeigte Leistung in kW direkt abgelesen werden kann.

Diese Messungen sind nicht ohne Probleme. Ein Problem besteht darin, dass mit dem verwendeten Gerät nicht die Motorleistung direkt, sondern die Zapfwellenleistung ermittelt wird, die um die Getriebeverlustleistung kleiner ist als die Motorleistung. Diese Getriebeverlustleistung ist von Landmaschine zu Landmaschine verschieden. Sie kann erfahrungsgemäss im Bereich von 4 bis 13% liegen. Ein weiteres Problem ist die Abhängigkeit der Motorleistung von den atmosphärischen Verhältnissen und schlussendlich die Messgenauigkeit des Gerätes selbst. Für die Messgenauigkeit des Gerätes selbst spielt der Wirkungsgrad der Ölpumpe eine ausschlaggebende Rolle, wobei zu vermerken ist, dass der Wirkungsgrad der Pumpe mit zunehmender Betriebsdauer und in Abhängigkeit von der der Pumpe entzogenen Leistung nicht unbeträchtlich abnimmt. Der Pumpenhersteller liefert mit der fabriksneuen Pumpe ein Leistungsdiagramm, das die Abhängigkeit der Fördermenge der Pumpe von der Drehzahl zeigt. Diese Kennlinie gilt u.a. jedoch nur für ganz neue Pumpen.

Aus den obigen Darlegungen ist ersichtlich, dass die mit solchen Prüfständen ermittelten Kenndaten den Charakter von Richtwerten haben, da in besonders ungünstig gelagerten Fällen sich alle Fehler mit maximalem Wert addieren können und so durch die Messung ein den Tatsachen nicht gerechtwerdendes Ergebnis erhalten werden kann.

Aus der DE-OS 2 912 283 ist ein Drehzahl- und Drehmoment-Mess- und Überwachungssystem für in Drehbewegung befindliche Maschinenbauteile bekannt, welches für Rührwerke in Reaktoren für chemische Prozesse verwendet wird. Die Antriebswelle für das Rührwerk ist dabei nicht direkt mit der motorischen Antriebswelle verbunden, sondern über Zwischenschaltung eines Differentialgetriebes, das mit seiner zweiten Antriebswelle eine hydraulische Pumpe antreibt, welche in einem geschlossenen hydraulischen Kreislauf liegt, in welchem, und zwar im gegenseitigen Nebenschluss, Druckwächter, Mengenwächter und Drosselorgane angeordnet sind. Zusätzlich sind elektronische Steuer- und Programmiergeräte vorgesehen. Mit dieser Einrichtung soll je nach Bedarf und den verfahrensmässigen Notwendigkeiten die Drehzahl und/oder das Drehmoment des Rührwerkes während eines betriebsmässigen Einsatzes aufrecht erhalten werden. Mit den genannten Gerätschaften wird eine Art hydraulischer Waage geschaffen, die, sobald sie aus dem Gleichgewicht gerät (Änderung der Drehzahl und/oder des Drehmomentes), selbsttätig nachgeregelt wird, um so die erwähnte Betriebsgrösse aufrecht zu erhalten.

Abgesehen davon, dass es sich hier nicht um einen Leistungsprüfstand handelt, ist mit einer Einrichtung dieser vorbekannten Art das gegenständliche der Erfindung zugrunde liegende Problem nicht zu lösen, auch nicht unter Berücksichtigung des Umstandes, dass bei dieser vorbekannten Einrichtung gleiche oder zumindest gleichartige Geräte verwendet werden, was ausschliesslich und allein daraus resultiert, dass es sich in beiden Fällen um hydraulische Einrichtungen handelt, in welchen in der Regel Mengenmesser, Durchflussmesser und Druckmesser eingesetzt werden.

Aufgabe der Erfindung ist es nun, bei einem Leistungsprüfstand für Motoren eine Verbesserung vorzuschlagen, um zumindest den Einfluss des Wirkungsgrades der Ölpumpe zu eliminieren, was sehr wichtig erscheint, da dieser Wirkungsgrad der Ölpumpe in erheblichen Grenzen schwankt. Zur Lösung dieser Aufgabe schlägt die Erfindung vor, dass in der Leitung zusätzlich ein Durchflussmengenmessgerät angeordnet ist und der Drehzahlmesser, das Druchflussmengenmessgerät und das Druckmessgerät mit einem Mikroprozessor verbunden sind, der die ihm zugeführten Werte einzeln und/oder in einer der Leistungsermittlung dienenden Verknüpfung anzeigt, wobei mindestens einer der gemessenen, dem Mikroprozessor zugeführten und der Leistungsermittlung dienenden Werte mit einem dem Wirkungsgrad der Ölpumpe entsprechenden Faktor mutliplizierbar ist.

Zweckmässigerweise ist dabei das Durchflussmengenmessgerät zwischen der Ölpumpe und dem Druckmessgerät in der Leitung angeordnet.

Bei einem Leistungsprüfstand der gegenständlichen Art ist zu bedenken, dass die hier verwendeten Pumpen, es handelt sich in der Regel um Zahnradpumpen, nicht nur den schlechtesten Wirkungsgrad gegenüber allen anderen mit diesem Leistungsprüfstand verbundenen Gerätschaften besitzen, sondern darüber hinaus auch dieser schlechte Wirkungsgrad noch zusätzlich in Abhängigkeit von verschiedenen Parametern schwankt. Pumpen dieser Art werden bei solchen Leistungsprüfständen eingesetzt. Aus dem Leistungsdiagramm solcher Pumpen ist erkennbar, dass der Wirkungsgrad der Pumpe zwischen 80 und 95% liegt und je nach Betriebszustand zwischen diesen Werten schwankt. Hingegen ist beispielsweise der Wirkungsgrad des Vorgeleges praktisch über seine gesamte Leistungsbreite konstant und kann mit 96% angesetzt werden. Konstante Werte der letzterwähnten Art sind beim Einsatz von elektronischen Rechnern ohne weiteres zu berücksichtigen. Gerätschaften mit schwankendem Wirkungsgrad können bei einem Einsatz solcher elektronischer Rechner ebenfalls berücksichtigt werden, doch bedarf dies einer entsprechenden, von der Charakteristik des jeweiligen Gerätes abhängigen Nachführung, so dass mit einem solchen Leistungsprüfstand auch die tatsächlich von der Zapfwelle abgegebene Leistung ermittelt werden kann.

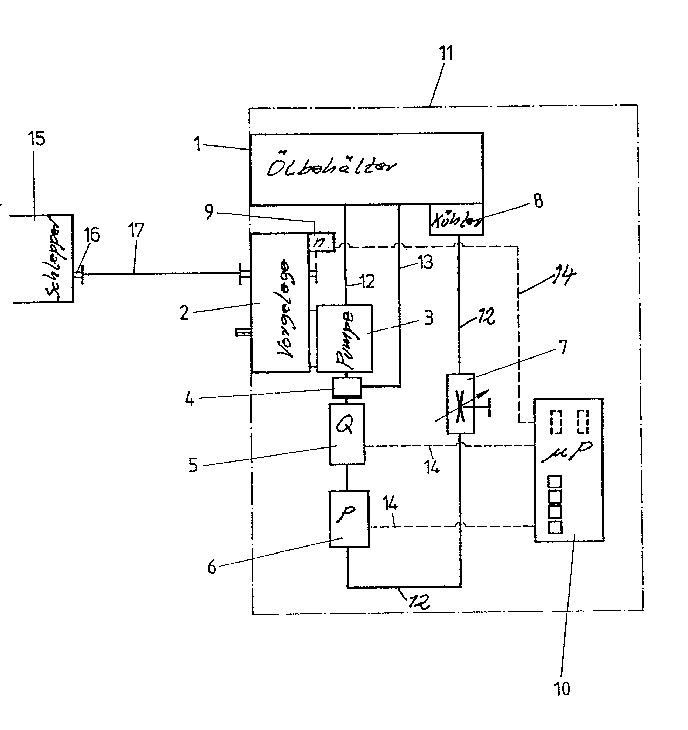

Die Zeichnung veranschaulicht die Erfindung.

In einem zweckmässigerweise fahrbar ausgebildeten Chassisrahmen 11 ist ein Ölbehälter 1, ein Vorgelege 2, eine Pumpe 3, ein Überdruckventil 4, ein Durchflussmengenmessgerät 5, ein Druckmessgerät 6, ein handbetätigbares Drosselventil 7, ein Kühler 8 und ein Mikroprozessor 10 mit entsprechenden Anzeigeeinrichtungen untergebracht. Eine Leitung 12 führt aus dem Ölbehälter 1 über die Pumpe 3 und über das Durchflussmengenmessgerät 5 und das Druckmessgerät 6, sowie das Drosselventil 7 in den Behälter 1 über den Wärmetauscher oder Kühler 8 zurück. Das ebenfalls in dieser Leitung 12 angeordnete Überdruckventil 4 ist direkt mit einer Entlastungsleitung 13 mit dem Ölbehälter 1 verbunden. Ein Drehzahlmesser 9 ermittelt die jeweilige Tourenzahl der Pumpe 3.

Drehzahlmesser 9, Durchflussmengenmessgerät 5 und Druckmessgerät 6 sind mit einem Mikroprozessor oder elektronischen Rechner 10 verbunden, dem die jeweilig gemessenen Betriebswerte über die Leitungen 14 übermittelt werden. Der Mikroprozessor oder elektronische Rechner ist so aufgebaut und geschaltet, dass er die jeweiligen gemessenen einzelnen Betriebswerte anzeigen kann, aber auch diese gemessenen Betriebswerte in der Weise rechnerisch verknüpft, dass die zu bestimmende Leistung in kW direkt angezeigt wird. Der Mikroprozessor oder elektronische Rechner 10 ist ferner so ausgebildet und gestaltet, dass die zur Leistungsermittlung notwendigen Messwerte unter Berücksichtigung des jeweilig zu berücksichtigenden Wirkungsgrades der Pumpe 3 beeinflusst werden können.

Soll der Motor eines landwirtschaftlichen Schleppers 15 geprüft werden, so wird dessen Zapfwelle 16 über eine Gelenkwelle 17 mit dem Vorgelege 2 verbunden und bei offener Drossel 7 der Motor des Schleppers 15 angeworfen. Die Drehzahl des Motors wird dann so weit gesteigert, dass sie einen Wert anfährt, der jenem entspricht, für welchen für die Pumpe 3 fabrikseitig zur Verfügung gestellte Leistungsdiagramme vorliegen. Nun wird bei der vorgegebenen und eingestellten Drehzahl n der tatsächliche Durchfluss durch das Durchflussmengenmessgerät 5 geprüft, wobei durch Drücken einer entsprechenden Taste am Mikroprozessor 10 dieser Wert digital angezeigt wird. Dieser angezeigte, tatsächliche Wert, der bei der Drehzahl n gemessenen Druchflussmenge Q wird nun mit den korrespondierenden Werten des herstellerseitig für die Pumpe gelieferten Leistungsdiagrammes verglichen. Liegt Übereinstimmung vor, so werden durch Drücken eines weiteren Knopfes am Mikroprozessor die für die Ermittlung der Leistung notwendigen Daten in diesem rechnerisch verknüpft und digital angezeigt. Wie auch bei bekannten Geräten üblich, wird während des Messvorganges das Drosselventil 7 manuell betätigt, und zwar so, dass das Ventil immer mehr geschlossen wird, dabei wird der zu prüfende Motor mit Gas beaufschlagt, so dass er die vorgegebene Drehzahl einhält.

Stellt sich jedoch heraus, dass bei der Drehzahl n die Pumpe 3 nur eine Menge Q' (kleiner als Q) fördert, so kann durch Drehen beispielsweise eines Potentiometers am Mikroprozessor der für die Leistungsbestimmung massgebende Wert Q' um einen Faktor $(Q–Q')/Q$ korrigiert werden, so dass für die Leistungsbestimmung ein relevanter Messwert erhalten wird, der den tatsächlichen Verhältnissen entspricht und in dem die Verminderung des Wirkungsgrades der Pumpe praktisch eliminiert ist. Am Potentiometer kann eine Skala angebracht sein, die diese Korrekturwerte in Prozenten angibt.

Es ist auch möglich, das Leistungsdiagramm der verwendeten Pumpe im Mikroprozessor zu speichern und zu programmieren, so dass der zu messende Wert direkt abgelesen werden kann, ohne dass es einer manuellen Nachführung oder Einstellung bedarf.

Den elektronischen Rechner oder Mikroprozessor hier im einzelnen zu erläutern oder zu beschreiben ist nicht notwenig, da handelsübliche Geräte für solche rechnerische Aufgaben zur Verfügung stehen und die nicht nur die einzelnen ihnen zugeführten Werte digital anzeigen können, sondern auch diese Werte in beliebig programmierbarer Art miteinander verknüpfen, wobei es noch zusätzlich möglich ist, die einer solchen Verknüpfung unterworfenen Werte hinsichtlich ihrer Grösse (und im Falle von Vektoren, hinsichtlich ihrer Richtung) zu beeinflussen.

Mit der gegenständlich erläuterten Einrichtung können auch andere Motoren als Landmaschinenmotoren geprüft werden, beispielsweise Antriebsaggregate für Kraftfahrzeuge. In diesem Fall wird die Welle 17 mit einem Walzenpaar verbunden, mit dem die Antriebsräder des Kraftfahrzeuges in reibungsschlüssiger Verbindung stehen, wodurch dann die Drehbewegung der Antriebsräder des Kraftfahrzeuges auf das erwähnte Walzenpaar übertragen wird.

## Patentansprüche

1. Leistungsprüfstand für Motoren, insbesondere Landmaschinenmotoren, mit einem mit der Zapfwelle (16) des zu prüfenden Motors verbindbaren Vorgelege (2) und einer vom Vorgelege (2) antreibbaren Ölpumpe (3), welche in einem in sich geschlossenen hydraulischen Kreis angeordnet ist, welcher ausserdem ein regelbares Drosselventil (7), ein Druckmessgerät (6), einen kühlbaren Ölbehälter (1, 8) sowie eine diese Baugruppen verbindende Leitung (12) umfasst, wobei das Vorgelege (2) ferner mit einem Drehzahlmesser (9) verbunden ist, dadurch gekennzeichnet, dass in der Leitung (12) zusätzlich ein Durchflussmengenmessgerät (5) angeordnet ist und der Drehzahlmesser (9), das Durchflussmengenmessgerät (5) und das Druckmessgerät (6) mit einem Mikroprozessor (10) verbunden sind, der die ihm zugeführten Werte einzeln und/oder in einer der Leistungsermittlung dienenden Verknüpfung anzeigt, wobei mindestens einer der gemessenen, dem Mikroprozessor (10) zugeführten und der Leistungsermittlung dienenden Werte mit einem dem Wirkungsgrad der Ölpumpe (3) entsprechenden Faktor multiplizierbar ist.

2. Leistungsprüfstand nach Anspruch 1, dadurch gekennzeichnet, dass das Durchflussmengenmessgerät (5) zwischen der Ölpumpe (3) und dem Druckmessgerät (6) in der Leitung (12) angeordnet ist.

## Claims

1. Performance test bed for engines, in particular agricultural machinery engines, having a transmission gear (2) which can be connected to the power take-off shaft (16) of the engine to be tested, and a oil pump (3) which can be driven by the transmission gear (2), this oil pump (3) being arranged in a closed, hydraulic circuit, this circuit also including an adjustable throttle valve (7), a pressure gauge (6), a coolable oil reservoir (1, 8) and a line (12) connecting these structural components, the transmission gear (2) being furthermore connected to a revolution indicator (9), characterized in that in addition an instrument for measuring the quantity of flow (5) is arranged in the line (12) and in that the revolution indicator (9), the flow quantity measuring instrument (5) and the pressure gauge (6) are connected to a microprocessor (10), this microprocessor showing the values with which it is fed individually and/or in a combination which serves to ascertain the performance, at least one of the measured values supplied to the microprocessor (10) and aiding performance ascertainment being multipliable by a factor corresponding to the efficiency of the oil pump (3).

2. Performance test bed according to claim 1, characterized in that the flow a quantity measuring instrument (5) is arranged in the line (12) between the oil pump (3) and the pressure gauge (6).

## Revendications

1. Banc d'essai de moteurs, notamment de moteurs de machines agricoles, comportant un moyen de transmission (2) reliable à la prise de force (16) de moteur à soumettre à l'essai et une pompe à huile (3) entraînée par ledit moyen de transmission (2) et agencée dans un circuit hydraulique fermé, et, en outre, une vanne d'étranglement réglable (7), un dispositif de mesure de pression (6), un réservoir d'huile refroidissable (1, 8) ainsi qu'un conduit (12) reliant ces parties, le moyen de transmission (2) étant relié à un indicateur de la vitesse de rotation (3), caractérisé en ce qu'un dispositif de mesure du débit (5) est agencé dans le conduit (12) et en ce que l'indicateur de vitesse de rotation (9), le dispositif de mesure de débit (5) et le dispositif de mesure de pression (6) sont reliés à un microprocesseur (10) qui affiche les valeurs fournies, séparément et/ou dans une relation destinée à établir la puissance, au moins l'une des valeurs mesurées fournies au microprocesseur (10) et destinées à établir la puissance étant multipliable par un facteur correspondant au rendement de la pompe à huile (3).

2. Banc d'essai selon la revendication 1, caractérisé en ce que le dispositif de mesure du débit (5) est agencé dans le conduit (12) entre la pompe à huile (3) et le dispositif de mesure de pression (6).